(19) Europäisches Patentamt
European Patent Office
Office européen des brevets

(11) Veröffentlichungsnummer: **0 362 726 B1**

(12) **EUROPÄISCHE PATENTSCHRIFT**

(45) Veröffentlichungstag der Patentschrift: **28.04.93**

(51) Int. Cl.[5]: **G02F 1/1337**, C08G 69/32

(21) Anmeldenummer: **89118138.0**

(22) Anmeldetag: **30.09.89**

(54) **Verwendung substituierter aromatischer Polyamide als Orientierungsschichten für Flüssigkristallanzeigeelemente und Flüssigkristallschaltelemente.**

(30) Priorität: **04.10.88 DE 3833631**

(43) Veröffentlichungstag der Anmeldung:
**11.04.90 Patentblatt 90/15**

(45) Bekanntmachung des Hinweises auf die Patenterteilung:
**28.04.93 Patentblatt 93/17**

(84) Benannte Vertragsstaaten:
**CH DE FR GB LI**

(56) Entgegenhaltungen:

**PATENT ABSTRACTS OF JAPAN, Band 6, Nr. 92 (P-119)[970], 29. Mai 1982; & JP-A-57 26 827**

**PATENT ABSTRACTS OF JAPAN, Band 7, Nr. 117 (P-198)[1262], 21. May 1983; & JP-A-58 37 261**

(73) Patentinhaber: **HOECHST AKTIENGESELL-SCHAFT**
**Postfach 80 03 20**
**W-6230 Frankfurt am Main 80(DE)**

(72) Erfinder: **Dübal, Hans-Rolf, Dr.**
**Heuhohlweg 6**
**W-6240 Königstein/Taunus(DE)**
Erfinder: **Murakami, Mikio**
**Bahnstrasse 2c**
**W-6240 Königstein/Taunus(DE)**
Erfinder: **Herrmann-Schönherr, Otto, Dr.**
**Grafenstrasse 15**
**W-6140 Bensheim 3(DE)**
Erfinder: **Schneller, Arnold, Dr.**
**Asternweg 41**
**W-6500 Mainz 21(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Kombination der Wirkungen ungewöhnlicher anisotroper und fluider Eigenschaften von Flüssigkristallen hat bekanntlich zur Verwendung von Flüssigkristallen in einer Vielzahl von elektro-optischen Schalt- und Anzeigevorrichtungen geführt. Dabei können die elektrischen, magnetische , elastischen oder thermischen Eigenschaften der Flüssigkristalle zu Orientierungsänderungen ausgenutzt werden. Optische Effekte lassen sich dann mit Hilfe der Doppelbrechung ("birefringence mode"), der Einlagerung von Farbstoffen ("guest-host mode") oder der Lichtstreuung erzielen. Zu diesem Zweck wurden bisher sowohl nematische als auch smektische Flüssigkristallphasen verwendet. Beispiele für solche Schalt- und Anzeigevorrichtungen sind bereits aus zahlreichen Patentschriften und Fachveröffentlichungen bekannt.

Als gemeinsame Bestandteile aller Flüssigkristallschaltvorrichtungen und Flüssigkristallanzeigevorrichtungen sind dabei u.a. Trägerplatten, z. B. aus Glas oder Kunststoff, beschichtet mit transparenten Elektroden und einer Orientierungsschicht, zu nennen. Hinzu kommen Abstandshalter, Kleberahmen, Polarisatoren, sowie für Farbdisplays dünne Farbfilterschichten. Weitere mögliche Komponenten sind Antireflex-, Passivierungs , Ausgleichs- und Sperrschichten sowie elektrische nichtlineare Elemente, wie z. B. Dünnschichttransistoren (TFT) und Metall-Isolator-Metall (MIM)-Elemente. Im Detail ist der Aufbau von Flüssigkristalldisplays bereits in einschlägigen Monographien beschrieben (vgl. z.B. E. Kaneko, "Liquid Crystal TV Displays: Principles and Applications of Liquid Crystal Displays", KTK Scientific Publishers, 1987, Seiten 12-30 und 163-172).

Unter den oben genannten Bestandteilen ist u.a. die Orientierungschicht von besonderer Bedeutung. Sie dient bekanntlich dem Zweck, eine gleichmäßige, störungsfreie Ausrichtung der Moleküllängsachsen und damit einen hohen Kontrast zu gewährleisten. Sie kann aus organischen Polymerisaten oder gegebenenfalls auch aus anorganischen Schichten bestehen.

Organische Polymerisatschichten werden üblicherweise auf die zu beschichtenden Flächen in Form von Polymerisatlösungen oder Lösungen löslicher Polymerisatvorstufen durch Druck-, Sprüh-, Tauch- oder Schleuderverfahren aufgetragen und anschließend - im allgemeinen durch Erhitzen des Naßfilms - ausgehärtet. Zur Erzielung einer orientierenden Wirkung wird die erhaltene harte Polymerisatschicht mit einer samtartig beschichteten oder mit Samt bezogenen Walze, einer Bürste oder ähnlichen Vorrichtungen "gerieben" und dadurch die Polymerisatoberfläche vorzugsweise geradlinig bzw. richtungsorientiert aufgerauht.

Der Erfindung lag nun die Aufgabe zugrunde, geeignete Orientierungsschichten für Flüssigkristallanzeigen verfügbar zu machen, die sich bei relativ niedrigen Temperaturen, d. h. unterhalb von 200 °C, aushärten lassen, eine gute Haftfestigkeit auf der Trägerunterlage und hohe Transparenz besitzen, und die eine besonders gleichmäßige Orientierung sowohl smektischer als auch nematischer Flüssigkristalle ermöglichen.

Zur Herstellung elektro-optischer Schalt- und Anzeigeelemente auf der Basis von Flüssigkristallen werden für Orientierungsschichten bereits Polyimide, Polyvinylalkohole und bestimmte, vorzugsweise aliphatische, Polyamide (Nylon) eingesetzt. Wegen Alterungsproblemen mit Polyvinylalkohol wird dieser für die Massenproduktion von Flüssigkristalldisplays heute kaum noch verwendet. Bei den meisten handeslüblichen Polyimid-Vorstufen liegen die Imidisierungstemperaturen der Ausgangs-Polyamidocarbonsäuren oberhalb von 350 °C. Solch hohe Reaktionstemperaturen sind zwar für herkömmliche LCD-Anwendungen, d. h. kleinflächige schwarz/weiß-Displays, wie z. B. für Uhren, Taschenrechner, etc., akzeptabel, sie sind aber schädlich für großflächige LCD-s, wie z. B. für Fernseh- und Computerbildschirme, etc. Der Grund dafür ist einerseits die Gefahr eines möglichen Verbiegens der mit Indium-Zinnoxid beschichteten Glasträger bei solchermaßen hohen Temperaturen, und andererseits die Gefahr der thermischen Zerstörung von Farbfiltern und Dünnschichttransistoren, die oberhalb von 200 °C einsetzen kann. Diese Gefahren treten zwar mit löslichen Polyimiden im allgemeinen nicht auf, jedoch haften lösliche Polyimide nur unzureichend auf Glas bzw. auf den mit Indium-Zinnoxid beschichteten Glasträgern, so daß infolge dessen ein zusätzlicher Verfahrensschritt, nämlich das Aufbringen eines Haftvermittlers, erforderlich wird. Demgegenüber treten z. B. mit aliphatischen Polyamiden zwar keine Haftungs- und Temperaturprobleme auf, jedoch sind die dafür erforderlichen Lösungsmittel - z.B. Kresol oder Ameisensäure - unter den einzuhaltenden Verfahrensbedingungen, d.h. Arbeiten im Reinraum, sehr schwierig handhabbar, da sie spezielle Abluft -bzw. Abzugsvorrichtungen und eine aufwendige und teure Zuführung von klimatisierter Frischluft erforderlich machen. Vorteilhaft wäre hier z. B. die Verwendung von N-Methylpyrrolidon (Kp. 206 °C) oder ähnlichen Verbindungen als Lösungsmittel, jedoch sind z. B. aliphatische Polyamide in diesen Lösungsmitteln unlöslich oder nicht ausreichend löslich.

Aus der JP-PS 58-37621 (Priorität: 31.8.81) sind aromatische Polyamide bekannt, die als Polymerisatmaterial für Orientierungsschichten verwendet werden können und die Struktureinheiten der Formel (a),

enthalten.

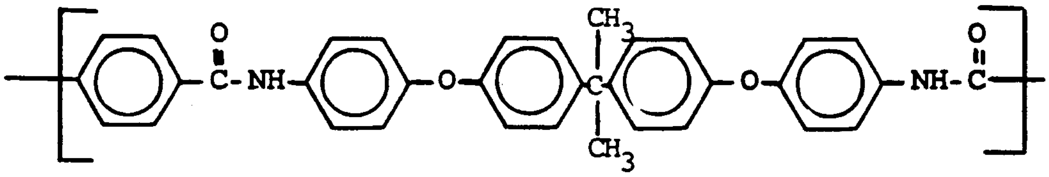 (a)

Auch diese aromatischen Polyamide sind in verschiedener Hinsicht als Polymerisatmaterial für Orientierungsschichten unzulänglich. So mangelt es ihnen z.B. an Transparenz sowie an der erforderlichen Filmhärte und insbesondere an der mit ihnen erzielbaren Kontrastwirkung, so daß die Produkte für den genannten Einsatzzweck nur bedingt verwendbar sind.

Es wurde nun überraschenderweise gefunden, daß man hochtransparente, gut haftende, bei Temperaturen unterhalb von 200 °C aushärtbare, in N-Methylpyrrolidonlösung auftragbare Orientierungsschichten für sowohl smektische als auch nematische Flüssigkristalle erhalten kann, wenn man als Polymerisat spezielle substituierte aromatische Polyamide verwendet, die Struktureinheiten der nachstehend angegebenen Formel I enthalten.

Gegenstand der Erfindung ist daher die Verwendung von substituierten aromatischen Polyamiden, die Struktureinheiten der Formel I

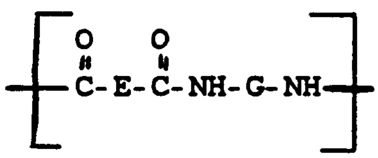 (I)

enthalten, als Orientierungsschicht in Flüssigkristallanzeigeelementen und Flüssigkristallschaltelementen, wobei in Formel I die Einheiten E und G folgende Bedeutung haben:

E = 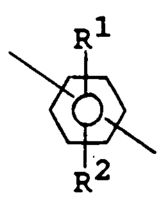

mit $R^1$, $R^2$, die gleich oder verschieden sein können und für H, ($C_1$-$C_6$)-Alkyl, vorzugsweise ($C_4$-$C_6$)-Alkyl, ($C_1$-$C_6$)-Alkoxy, vorzugsweise ($C_4$-$C_6$)-Alkoxy, stehen mit der Maßgabe, daß mindestens einer der Reste $R^1$ oder $R^2$ ein tertiär substituiertes C-Atom, vorzugsweise die Gruppe $-C(CH_3)_3$, enthält, oder

= 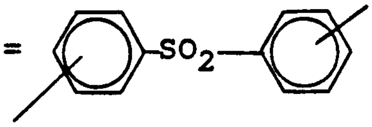 oder 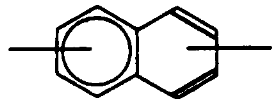 oder

= 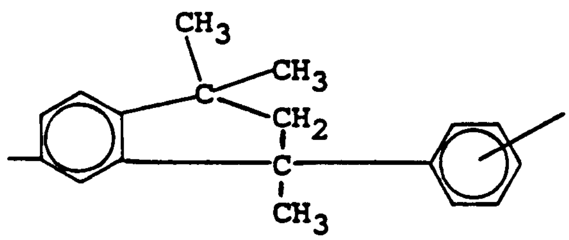 , und

G = 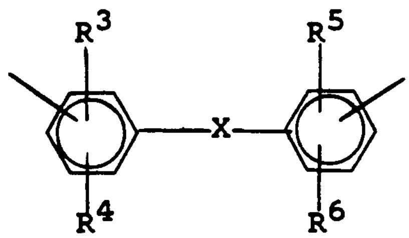

mit $R^3$, $R^4$, $R^5$, $R^6$, die gleich oder verschieden sein und für $-CH_3$, $-CF_3$, $-OCH_3$, -F, -Cl, -Br oder -H stehen können, sowie X, das für -O-, $-C(CH_3)_2-$, $-C(CF_3)_2-$, $-SO_2-$, -CO-, $-CH_2-$oder den Rest

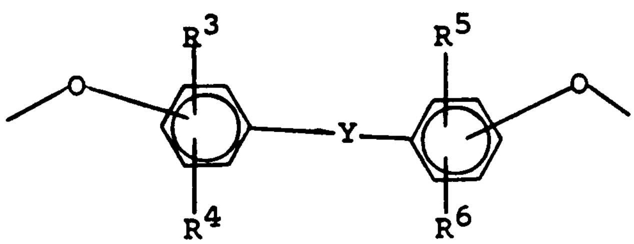

mit $R^3$ bis $R^6$ wie oben definiert und Y = $-C(CH_3)_2-$, $-C(CF_3)_2-$, $-SO_2-$, -CO-, $-CH_2-$, -O- stehen kann, oder

= 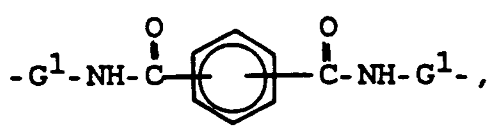

wobei $G^1$ für die vorstehend genannten Bedeutungen von G stehen kann.

Die erfindungsgemäßen Polymerisate mit Struktureinheiten der Formel I können entweder Homokondensate sein, welche nur gleiche Struktureinheiten der Formel I enthalten, oder Cokondensate aus verschiedenen Struktureinheiten der Formel I. Bevorzugt sind Copolyamide, die verschiedene Struktureinheiten der Formel I in vorzugsweise statistischer Verteilung enthalten.

Gegenstand der Erfindung sind ferner Polymerisate aus Cokondensaten mit mindestens 10 Mol-%, bezogen auf das Polymerisat, Struktureinheiten der Formel I, die gleich oder verschieden sein können, und Struktureinheiten der Formel II,

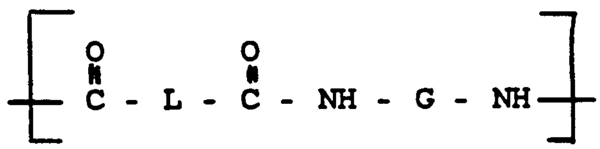 (II)

worin L für 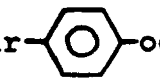 oder 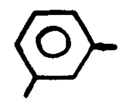 oder 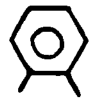

steht und G die Bedeutung wie in Formel I hat.

Das Molverhältnis der Struktureinheiten der Formeln I:II in den Copolyamiden, bei vorzugsweise statistischer Verteilung der Struktureinheiten, liegt vorzugsweise im Bereich von 1:9 bis 9,5 :0,5, insbesondere 1:9 bis 1:8.

Als Maß für das Molekulargewicht der Polymerisate kann die Grenzviskosität [$\eta$], die nach bekannten Meßmethoden an Lösungen der Polymerisate ermittelt werden kann, herangezogen werden. Die Grenzviskosität [$\eta$] der erfindungsgemäßen Polyamide bzw. Copolyamide kann in einem großen Bereich variiert werden. Sie beträgt vorzugsweise 0,2 bis 5 dl/g, insbesondere 0,4 bis 4,2 dl/g,gemessen in N-Methylpyrrolidon (NMP)-Lösung bei 25 ° C.

Die Synthese der erfindungsgemäßen Polyamide und Copolyamide kann durch Reaktion geeigneter Monomerer nach Standardmethoden erfolgen. Vorzugsweise können z. B. entsprechende Säurechloride mit den entsprechenden Aminen in Gegenwart von Lösungsmitteln, wie z. B. n-Methylpyrrolidon oder Dimethylacetamid, bei bis auf ca. 80 ° C ansteigenden Temperaturen umgesetzt werden. Für bestimmte Monomerkombinationen kann z. B. auch eine Schmelzkondensation bei höheren Temperaturen durchgeführt werden.

Erfindungsgemäße Polyamide und Copolyamide mit Struktureinheiten der Formel I besitzen relativ hohe Glastemperaturen ($T_G$), die vorzugsweise höher als 200 ° C liegen, sowie eine verstärkte Teilkristallinität. Beide Eigenschaftsmerkmale wirken sich vorteilhaft bei der erfindungsgemäßen Verwendung dieser Polyamide als Orientierungsschichten aus. Analoges Verhalten zeigen auch erfindungsgemäße Copolyamide mit Struktureinheiten der Formeln I und II.

Erfindungsgemäße Orientierungsschichten werden von den üblichen Flüssigkristallsubstanzen nicht angelöst und die gehärteten Orientierungsschichten besitzen glatte, defektfreie Oberflächen, die keine Risse oder andere Inhomogenitäten aufweisen. Die Schichten lassen sich aus Polyamidlösungen, z. B. in N-Methylpyrrolidon, mit Polymerisatgehalten von ca. 0,1 bis 5 Gew.-% herstellen. Diese Lösungen verhalten sich inert und sind sehr lagerungstabil. Unter bestimmten Bedingungen lassen sich die aus den Polyamidlösungen hergestellten sog. Naßfilme bereits bei Temperaturen unterhalb von 100 ° C verfestigen, da sie nicht reaktiv sind und nicht chemisch verändert zu werden brauchen.

Die orientierende Wirkung wurde an LCD-Zellen geprüft, deren Orientierungsschicht aus erfindungsgemäßen Polyamiden, die Struktureinheiten der Formel I enthalten, hergestellt worden ist. Dazu wird die maximale Lichtextinktion der gefüllten Zelle zwischen gekreuzten Polarisatoren gemessen. Die bei dynamischer elektrischer Ansteuerung erhaltenen Kontrastwerte sind ein Maß für die Qualität der Orientierungsfähigkeit. Außerdem wird der polarisationsmikroskopisch erhaltene visuelle Eindruck zur Bewertung der Kontrastfähigkeit mit herangezogen. Mit den aus erfindungsgemäßen Polyamiden, die wiederkehrende Struktureinheiten der Formel I enthalten, hergestellten Orientierungsschichten wurden nun überraschenderweise besonders hohe Kontrastwerte sowohl mit ferroelektrischen als auch mit smektisch A und mit nematischen Zellentypen erhalten, vergleichsweise zu Orientierungsschichten aus vergleichbaren aromatischen Polyamiden des Standes der Technik.

Die Erfindung wird durch die nachfolgenden Beispiele näher erläutert.

**Beispiel 1**

**Herstellung eines Polyamids mit Struktureinheiten der Formel**

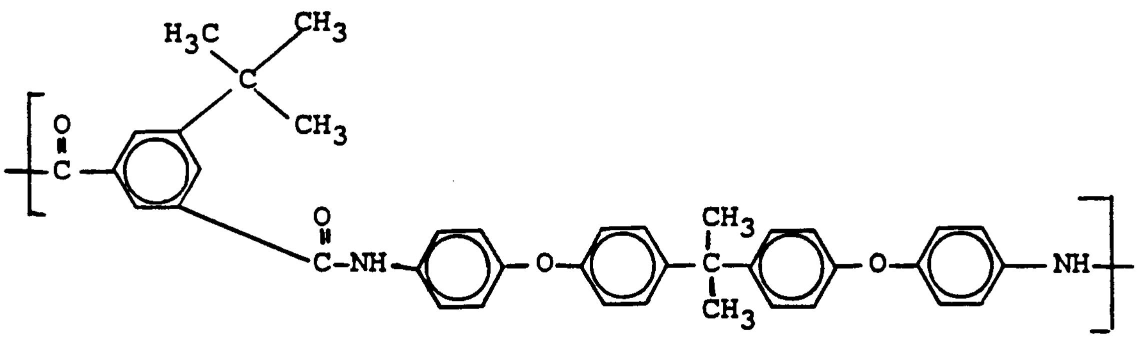

**Ausgangskomponenten:**

a) 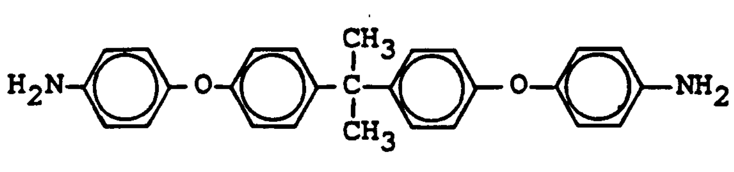 (Diamin 1)

b) 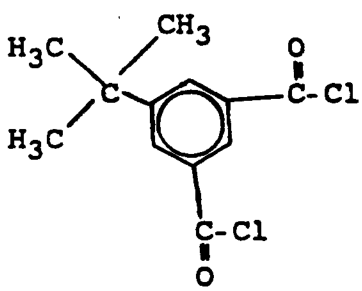 (Säurechlorid 1)

In einer Rührapparatur werden 82,11 g Diamin 1 in 1000 g trockenem N-Methylpyrrolidon (NMP) gelöst und anschließend der Lösung unter Rühren innerhalb einer Stunde bei gleichzeitigem Aufheizen von 15 °C auf 70 °C 51,83 g Säurechlorid 1 zudosiert. Die resultierende klare Lösung wird bei 70 °C noch 1 Stunde gerührt. Vorzugsweise werden die Polykondensationsreaktionen erfindungsgemäß mit geringem Diamin-Überschuß durchgeführt und nach Beendigung der Umsetzung durch Zusatz einer geringen Menge Benzoylchlorid abgestoppt, so daß das resultierende Polymerisat vorzugsweise aus linearmakromolekularen Polykondensationspolyamiden besteht, die an beiden Molekülenden benzoylierte Aminoendgruppen aufweisen. Durch Zugabe von 13 g CaO wird das Reaktionsgemisch anschließend neutralisiert und nochmals 1 Stunde gerührt.

Die filtrierte Reaktionslösung wird unter Wasserzugabe koaguliert, das ausgefallene Polymerisat mehrmals mit Wasser und Aceton gewaschen, anschließend unter Vakuum (ca. 50 mbar) und schwachem Stickstoffstrom bei 180 °C bis zur Gewichtskonstanz getrocknet.

Mittels DSC- und Torsionspendelmessungen wurde für das erhaltene Polyamid eine Glastemperatur ($T_G$) von 255 °C ermittelt. Durch Röntgenmessungen konnte eine Teilkristallinität von 30 Gew.-%, bezogen auf das Polyamid, ermitteln werden. Mittels DSC-Messungen läßt sich zeigen, daß die Kristallite unterhalb von 400 °C nicht aufschmelzen. Die Grenzviskosität [$\eta$] des Polyamids beträgt 1,5 dl/g, gemessen in NMP bei 25 °C.

**Beispiel 2**

**Herstellung eines Polyamids mit Struktureinheiten der Formel**

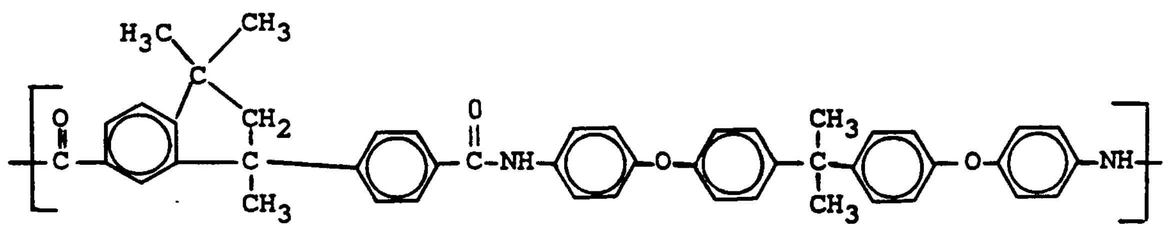

Ausgangskomponenten:

a) Diamin 1 aus Beispiel 1

b) 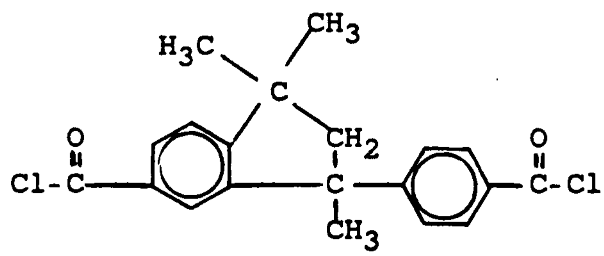 (Säurechlorid 2)

Analog Beispiel 1 werden 82,11 g Diamin 1 aus Beispiel 1 in 1000 g trockenem NMP gelöst und anschließend der Lösung unter Rühren innerhalb einer Stunde bei gleichzeitigem Aufheizen von 15 °C auf 70 °C 72,05 g Säurechlorid 2 zudosiert. Die resultierende klare Lösung wird wie in Beispiel 1 beschrieben weiterverarbeitet und das gebildete Polyamid isoliert, gewaschen und getrocknet. Mittels DSC-und Torsionspendelmessungen wurde eine Glastemperatur ($T_G$) von 265 °C ermittelt. Die Grenzviskosität [$\eta$] des Polyamids beträgt 0,8 dl/g, gemessen in NMP bei 25 °C.

**Beispiel 3**

**Herstellung eines Polyamids mit Struktureinheiten der Formel**

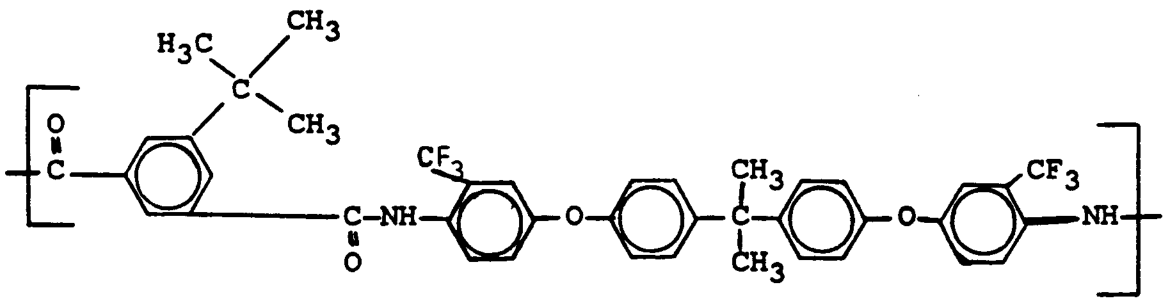

Ausgangskomponenten:

a) Säurechlorid 1 aus Beispiel 1

b) 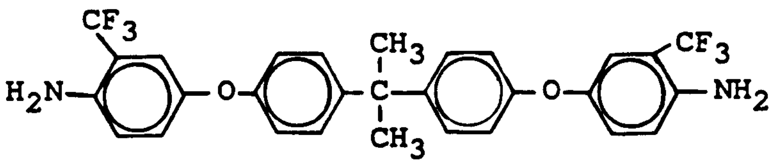 (Diamin 2)

Analog Beispiel 1 werden 109,3 g Diamin 2 in 1000 g trockenem NMP gelöst und der Lösung unter Rühren innerhalb einer Stunde bei gleichzeitigem Aufheizen von 15 °C auf 70 °C 51,83 g Säurechlorid 1 aus Beispiel 1 zudosiert. Die resultierende klare Lösung wird wie in Beispiel 1 beschrieben weiterverarbeitet und das gebildete Polyamid isoliert, gewaschen und getrocknet. Mittels DSC- und Torsionspendelmessungen wurde eine Glastemperatur ($T_G$) von 250 °C ermittelt. Die Grenzviskosität [$\eta$] des Polyamids beträgt 0,7 dl/g, gemessen in NMP bei 25 °C.

Vergleichsbeispiel 1

Die Glastemperatur ($T_G$) eines dem Polyamid des Beispiels 1 vergleichbaren Polyamids mit Struktureinheiten der weiter oben beschriebenen Formel (a) des Standes der Technik, hergestellt und geprüft analog dem Beispiel 1 unter Ersatz des Diamins 1 durch ein aus Formel (a) abgeleitetes Diamin, beträgt nur 240 °C, bei sehr viel niedrigerer Teilkristallinität von ca. 5 Gew.-%. Die Grenzviskosität [$\eta$] des Polyamids beträgt 2,0 dl/g, gemessen in NMP bei 25 °C.

**Beispiel 4**

**Herstellung eines Copolyamids mit statistisch verteilten Struktureinheiten der Formeln**

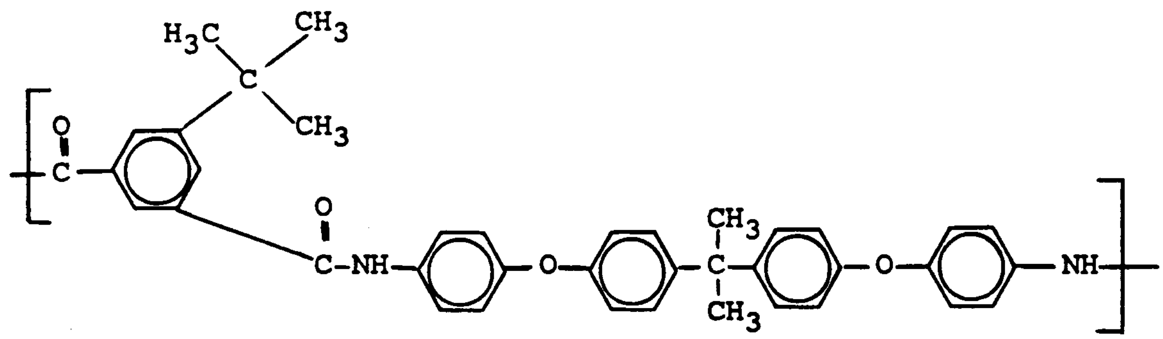

und

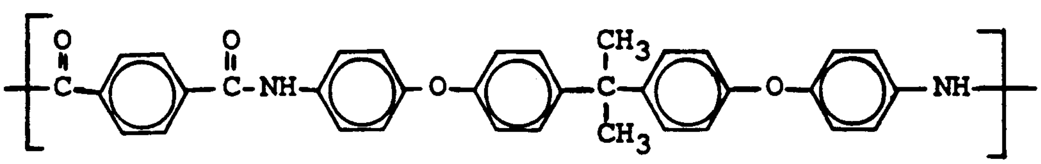

im

Molverhältnis 1:1.

Ausgangskomponenten:

a) Diamin 1 aus Beispiel 1
b) Säurechlorid 1 aus Beispiel 1

c) 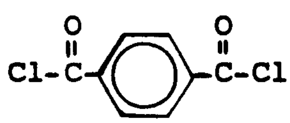 (Säurechlorid 3)

Analog Beispiel 1 werden 82,11 g Diamin 1 aus Beispiel 1 in 1000 g trockenem NMP gelöst und der Lösung unter Rühren innerhalb einer Stunde bei gleichzeitigem Aufheizen von 15 °C auf 70 °C ein Gemisch aus 25,92 g Säurechlorid 1 aus Beispiel 1 und 20,31 g Säurechlorid 3 zudosiert. Die resultierende klare Lösung wird wie in Beispiel 1 beschrieben weiterverarbeitet und das gebildete copolymere Polyamid isoliert, gewaschen und getrocknet. Mittels DSC- und Torsionspendelmessungen wurde eine Glastemperatur ($T_G$) von 225 °C ermittelt. Die Grenzviskosität [$\eta$] des Copolyamids beträgt 4,1 dl/g, gemessen in NMP bei 25 °C.

**Beispiel 5**

**Herstellung von Polymerisatschichten auf Glasträgern**

Es werden jeweils 1 gew.-%ige Lösungen der Polymerisate der Beispiele 1 bis 4 in wasserfreiem NMP in verschiedenen Schichtdicken auf verschiedene Glasträger aufgetragen. Der Auftrag erfolgt jeweils durch übliches Aufschleudern (30 sec. lang) bei verschiedenen Umdrehungsgeschwindigkeiten, wobei auf den Glasträgern unterschiedlich dicke Naßfilme erzeugt werden, die anschließend bei 150 °C 2 Stunden lang getrocknet werden. Es werden defektfreie homogene Polymerisatschichten mit folgenden Dicken erhalten:
12 nm bei 3000 Umdrehungen/Minute
30 nm bei 1000 Umdrehungen/Minute
60 nm bei 500 Umdrehungen/Minute

**Beispiel 6**

**Herstellung von Polymerisatschichten aus mit Indium-Zinnoxid beschichteten Glasträgern**

Es werden jeweils 3 gew.-%ige Lösungen der Polymerisate der Beispiele 1 bis 4 in wasserfreiem NMP in verschiedenen Schichtdicken auf verschiedene mit Indium-Zinnoxid beschichtete Glasträger wie in Beispiel 5 beschrieben unter Variation der Umdrehungszahlen aufgeschleudert und die entstandenen Naßfilme anschließend bei 150 °C 2 Stunden lang getrocknet. Es werden defektfreie, homogene Polymerisatschichten mit folgenden Dicken erhalten:

300 nm bei 1000 Umdrehungen/Minute
100 nm bei 3000 Umdrehungen/Minute
70 nm bei 5000 Umdrehungen/Minute
50 nm bei 7000 Umdrehungen/Minute

**Beispiel 7**

**Kontrastfähigkeitstest**

Es werden jeweils 1,5 gew.-%ige Lösungen der Polymerisate der Beispiele 1 bis 4 in wasserfreiem NMP mit 2000 Umdrehungen/Minute 30 sec. lang auf mit Indium-Zinnoxid beschichtete Glasträger aufgeschleudert und die entstandenen Naßfilme anschließend bei 150 °C 2 Stunden lang getrocknet. Danach werden die erhaltenen Polymerisatschichten mit Hilfe einer Reibemaschine jeweils 2 mal in gleicher Richtung schwach gerieben.

Jeweils 2 der so erhaltenen und mit dem gleichen Polymerisat beschichteten Prüfglasträger werden parallel sowie antiparallel aufeinander gelegt und ihre orientierende Wirkung mit der nematischen Raumtemperaturmischung ZLI 1565 (Hersteller: Fa. E. Merck) geprüft. Es ergeben sich dabei jeweils vollkommen homogene planare Orientierungen, was durch eine völlige Lichtextinktion zwischen gekreuzten Polarisatoren bei geeigneter Drehung der Zelle (d. H. die Reibrichtung liegt parallel zu der Schwingungsrichtung einer der beiden Polymerisatoren) festgestellt wird. Die in üblicher Weise ermittelten Kontrastwerte sind in der nachfolgenden Tabelle 1 zusammengefaßt wiedergegeben.

Die in der Tabelle 1 wiedergegebenen Kontrastwerte zeigen die Überlegenheit von Orientierungsschichten aus den erfindungsgemäßen Polyamiden der Beispiele 1 bis 4 vergleichsweise zu dem Polyamid des Vergleichsbeispiels 1 mit Struktureinheiten der Formel (a) des Standes der Technik.

Tabelle 1

| Orientierungsschicht aus Polyamid des | Kontrastwert |
|---|---|
| Beispiels 1 | 55:1 |
| " 2 | 65:1 |
| " 3 | 60:1 |
| " 4 | 55:1 |
| Vergleichsbeispiels 1 | 20:1 |

**Beispiel 8**

Es werden jeweils 1,5 gew.-%ige Lösungen der Polymerisate aus Beispiel 1 und 2 in wasserfreiem NMP hergestellt und diesen 0,2 Gew.-%, bezogen auf die Lösung, T-Aminopropyltriethoxysilan zugesetzt. Die so erhaltenen Lösungen werden dann jeweils mit 3000 Umdrehungen/Minute auf Glasträger bzw. auf mit Indium-Zinnoxid beschichtete Glasträger 30 sec. lang aufgeschleudert und die entstandenen Naßfilme anschließend bei 90 °C in einem Vakuum-Trockenschrank getrocknet. Es werden trotz der niedrigen

Trocknungstemperatur von 90 °C sehr gute Haftungen der erfindungsgemäßen Polymerisatschichten sowohl auf Glasträgern als auch auf mit Indium-Zinnoxid beschichteten Glasträgern erzielt.

**Beispiel 9**

Zum Nachweis der vorteilhaften Anwendbarkeit erfindungsgemäßer Polyamide als Orientierungsschichten in elektro-optischen Schalt- und Anzeigeelementen wird eine verdrillte nematische Zelle vom Schadt-Helfrich-Typ (vgl. M. Schadt, W. Helfrich, Appl. Phys. Lett. 18 (1971) 127) hergestellt. Dazu wird auf Glasträgern jeweils eine mit Indium-Zinnoxid beschichtete Elektrodenfläche von 4x4 mm strukturiert, gereinigt, getrocknet und, wie in Beispiel 7 beschrieben, mit erfindungsgemäßem Polymerisat aus Beispiel 2 beschichtet und gerieben. Jeweils 2 der so erhaltenen beschichteten Glasträger werden unter Verwendung von Abstandshaltern zu einer Zelle mit einem lichten Elektrodenabstand von 10,4 µm verklebt, wobei die Reibrichtungen auf den Polymerisatflächen der beiden Glasträger um 90 °C gegeneinander verdreht sind. Die Zelle wird mit der nematischen Raumtemperaturmischung ZLI 1565 (Hersteller: Fa. E. Merck) unter Zusatz von 0,1 Gew.-%, bezogen auf ZLI 1565, eines chiralen Dotierstoffes gefüllt und der elektrooptische Effekt durch Anlegen bzw. Abschalten einer Spannung geprüft bzw. nachgewiesen. Bei Verwendung von Orientierungsschichten aus dem Polyamid des Beispiel 2 beträgt die Schwellspannung $U_{10}$ = 2,4 Volt (10 %-iger Anstieg der Intensität), das Verhältnis $U_{90}/U_{10}$ = 1,44 (bei 25 °C).

**Beispiel 10**

Zur Prüfung der vorteilhaften Verwendbarkeit erfindungsgemäßer Polyamide als Orientierungsschichten in ferroelektrischen Displays wird wie in Beispiel 9 beschrieben eine Zelle hergestellt unter Verwendung von erfindungsgemäßem Polymerisat aus Beispiel 2, jedoch mit dem Unterschied, daß die Reibrichtungen auf den Polymerisatflächen der beiden Glasträger parallel zueinander verlaufen und der Elektrodenabstand 3,2 µm beträgt. Die Zelle wird mit einer ferroelektrischen Testmischung gefüllt und es werden die Bistabilität und die Schaltzeiten bestimmt mit folgendem Ergebnis:
Schaltzeiten ( 25 °C):
10 bis 90 % Anstiegszeit bei Rechteckspannung (± 10V/µm) = 70 µsec
Kritische Pulsbreite bei 10 V/µm = 130 µsec
Die Bistabilität wurde für einen Zeitraum von mindestens einer Sekunde, d. h. mehr als dem Fünfzigfachen üblicher Zykluszeiten von Displays (20 msec), bewiesen.

**Patentansprüche**

1. Verwendung von substituierten aromatischen Polyamiden als Orientierungsschicht in Flüssigkristallanzeigeelementen und Flüssigkristallschaltelementen, dadurch gekennzeichnet, daß die Polyamide Struktureinheiten der Formel 1

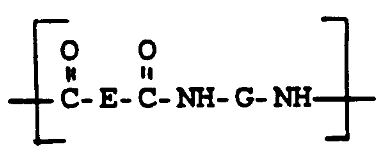

(I)

enthalten, wobei in Formel I die Einheiten E und G folgende Bedeutung haben:

E =

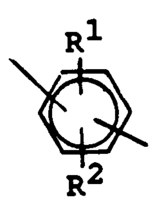

mit $R^1$, $R^2$, die gleich oder verschieden sein können und für H, $(C_1-C_6)$-Alkyl, oder $(C_1-C_6)$-Alkoxy

stehen mit der Maßgabe, daß mindestens einer der Reste $R^1$ oder $R^2$ ein tertiär substituiertes C-Atom, vorzugsweise die Gruppe $-C(CH_3)_3$, enthält, oder

= 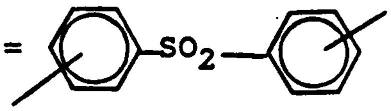 oder 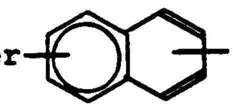 oder

= 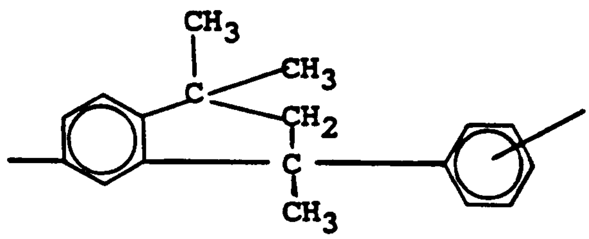 , und

G = 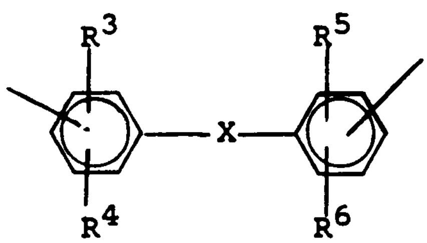

mit $R^3$, $R^4$, $R^5$, $R^6$, die gleich oder verschieden sein und für $-CH_3$, $-CF_3$, $-OCH_3$, -F, -Cl, -Br oder -H stehen können, sowie X, das für -O-, $-C(CH_3)_2-$, $-C(CF_3)_2-$, $-SO_2-$, -CO-, $-CH_2-$oder den Rest

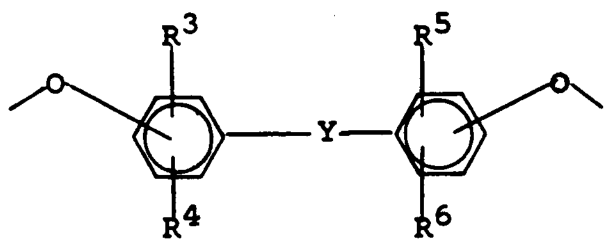

mit $R^3$ bis $R^6$ wie oben definiert und Y = $-C(CH_3)_2-$, $-C(CF_3)_2-$, $-SO_2-$, -CO-, $-CH_2-$, -O- stehen kann, oder

= 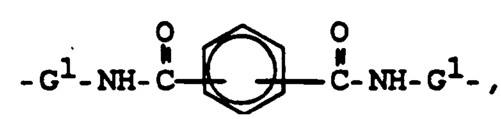

wobei $G^1$ für die vorstehend genannten Bedeutungen von G stehen kann.

**2.** Verwendung nach Anspruch 1, dadurch gekennzeichnet, daß die Polyamide Copolymerisate darstellen, die mindestens 10 Mol-%, bezogen auf das Copolymerisat, Struktureinheiten der Formel I sowie Struktureinheiten der Formel II,

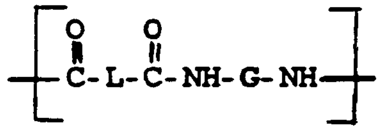

worin L für 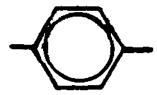 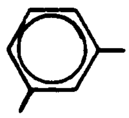 oder 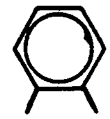 steht

und G die Bedeutung wie in Formel I hat, enthalten.

3. Verwendung nach Anspruch 1 und/oder 2, dadurch gekennzeichnet, daß die Polyamide Struktureinheiten der Formel

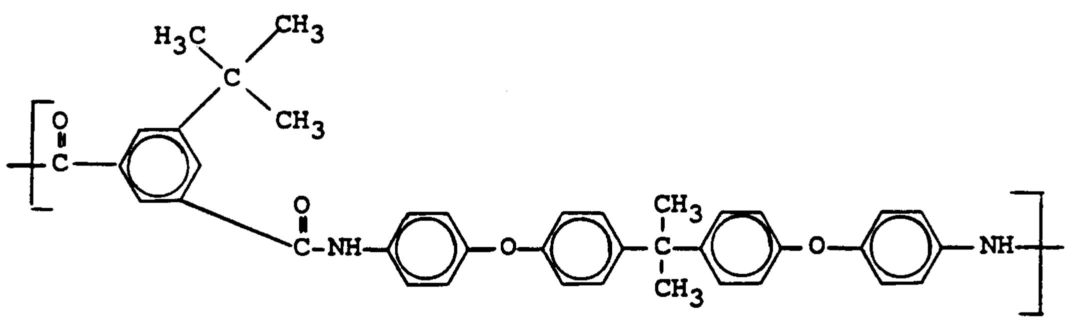

enthalten.

4. Verwendung nach Anspruch 1 und/oder 2, dadurch gekennzeichnet, die die Polyamide Struktureinheiten der Formel

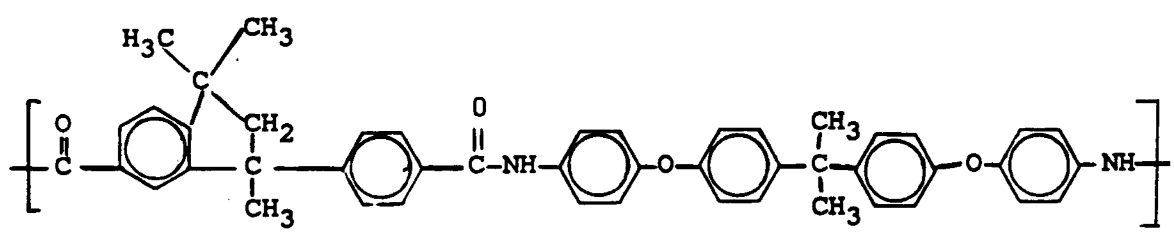

enthalten.

5. Verwendung nach Anspruch 1 und/oder 2, dadurch gekennzeichnet, daß die Polyamide 10 bis 20 Mol-% Struktureinheiten der Formel

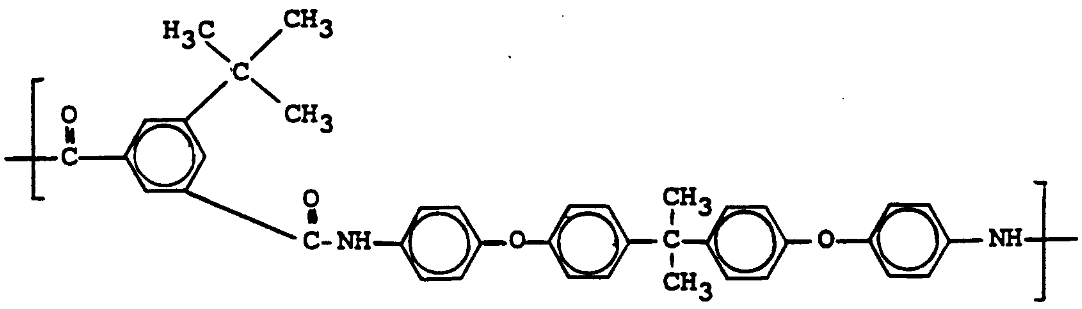

und 90 bis 80 Mol-% Struktureinheiten der Formel

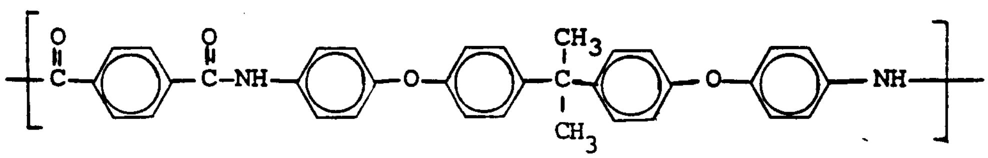

enthalten.

**6.** Verwendung nach Anspruch 1 und/oder 2, dadurch gekennzeichnet, daß die Polyamide 10 bis 20 Mol-% Struktureinheiten der Formel

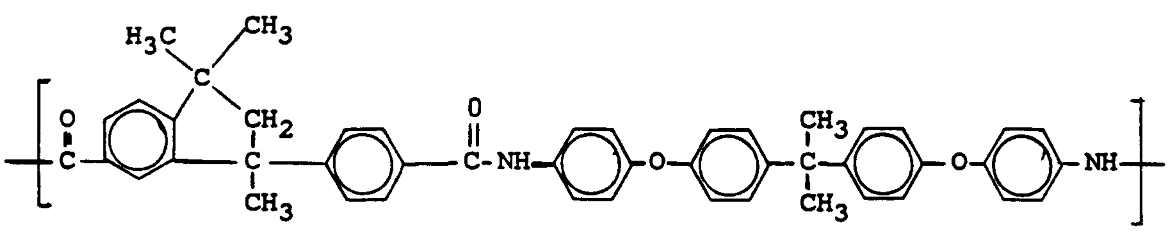

und 90 bis 80 Mol-% Struktureinheiten der Formel

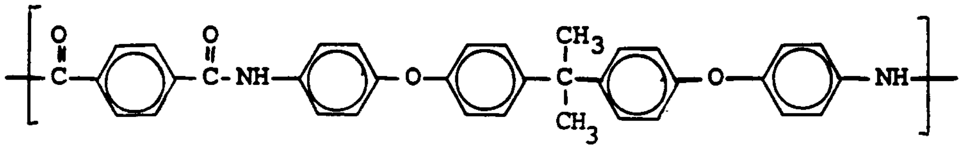

enthalten.

**7.** Elektro-optische Flüssigkristallanzeigeelemente und/oder Flüssigkristallschaltelemente. dadurch gekennzeichnet, daß sie Polymerisate aus aromatischen Polyamiden nach einem oder mehreren der Ansprüche 1 bis 6 als Orientierungsschicht für die Flüssigkristalle enthalten.

## Claims

**1.** Use of substituted aromatic polyamides as orientation layer in liquid crystal display elements and liquid crystal switching elements, wherein the polyamides contain structural units of the formula I

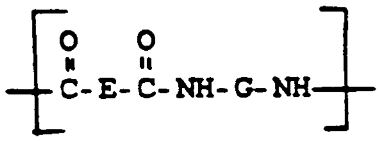 (I)

in which in formula I the units E and G have the following meaning:

E is 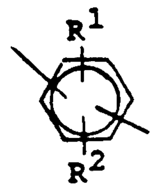

where $R^1$, $R^2$, which can be identical or different, are H, $(C_1$-$C_6)$-alkyl or $(C_1$-$C_6)$-alkoxy, with the proviso that at least one of the radicals $R^1$ or $R^2$ contains a tertiary substituted carbon atom, preferably the group $-C(CH_3)_3$, or

E is 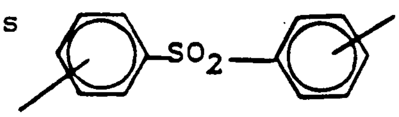 or 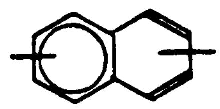 or

E is 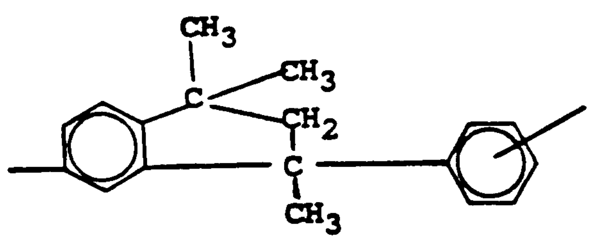 , and

G is 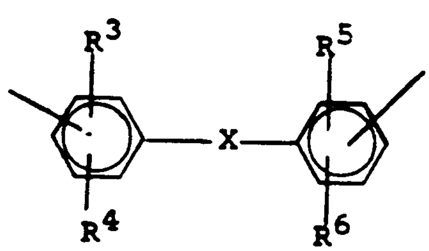

where $R^3$, $R^4$, $R^5$, $R^6$, which can be identical or different, are $-CH_3$, $-CF_3$, $-OCH_3$, -F, -Cl, -Br or -H, and X can be -O-, $-C(CH_3)_2$-, $-C(CF_3)_2$-, $-SO_2$-, -CO-, $-CH_2$- or the radical

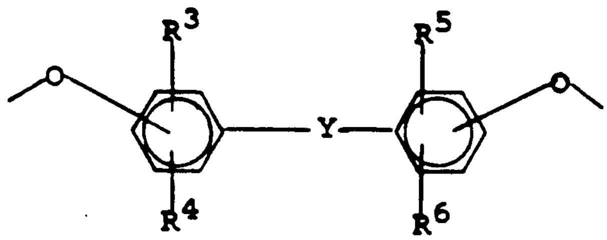

where $R^3$ to $R^6$ are as defined above and Y is $-C(CH_3)_2-$, $-C(CF_3)_2-$, $-SO_2-$, -CO-, $-CH_2-$, or -O-, or

G is 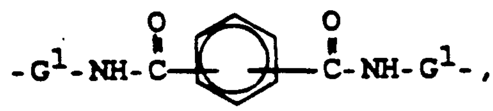

in which $G^1$ can have the meanings mentioned above for G.

**2.** The use as claimed in claim 1, wherein the polyamides are copolymers which contain at least 10 mol%, relative to the copolymer, of structural units of the formula I and structural units of the formula II

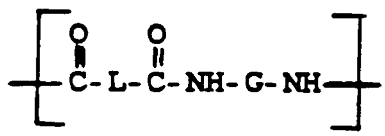

in which L is

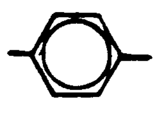 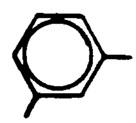 or 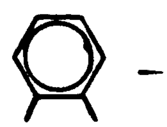

and G has the meaning as in formula I.

**3.** The use as claimed in claim 1 and/or 2, wherein the polyamides contain structural units of the formula

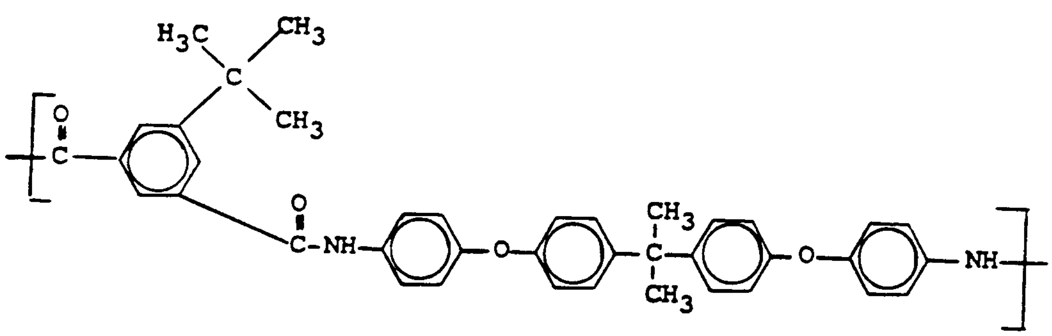

4. The use as claimed in claim 1 and/or 2, wherein the polyamides contain structural units of the formula

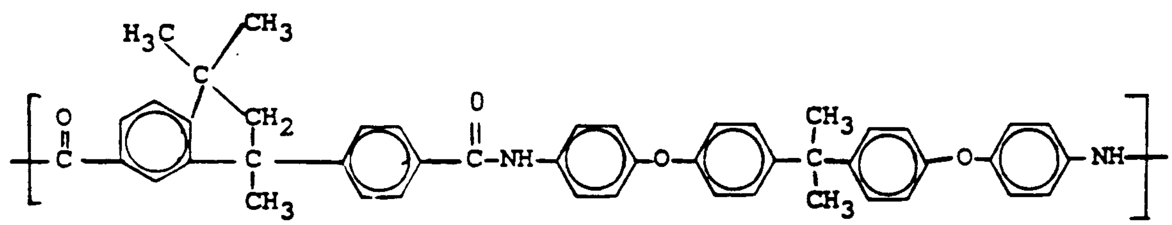

5. The use as claimed in claim 1 and/or 2, wherein the polyamides contain 10 to 20 mol% of structural units of the formula

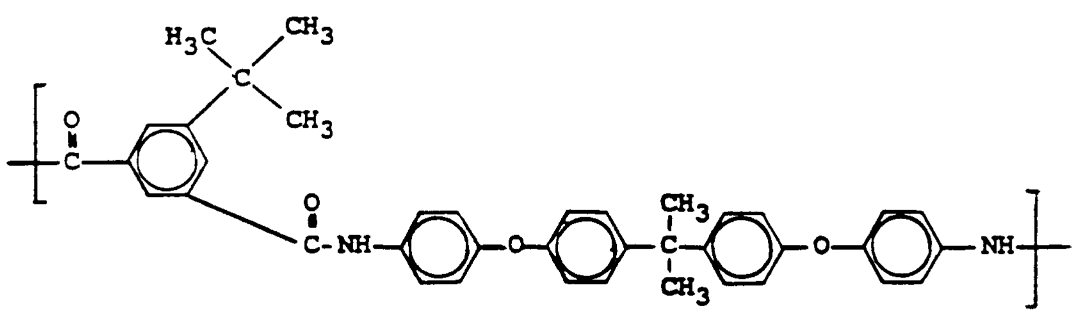

and 90 to 80 mol% of structural units of the formula

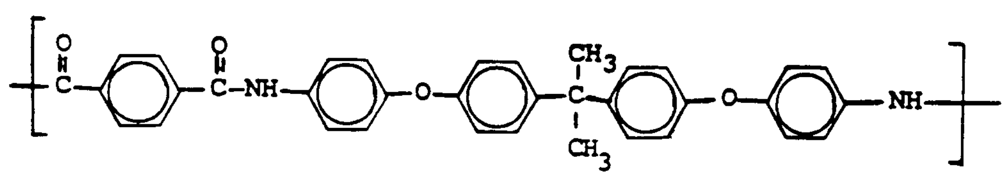

6. The use as claimed in claim 1 and/or 2, wherein the polyamides contain 10 to 20 mol% of structural units of the formula

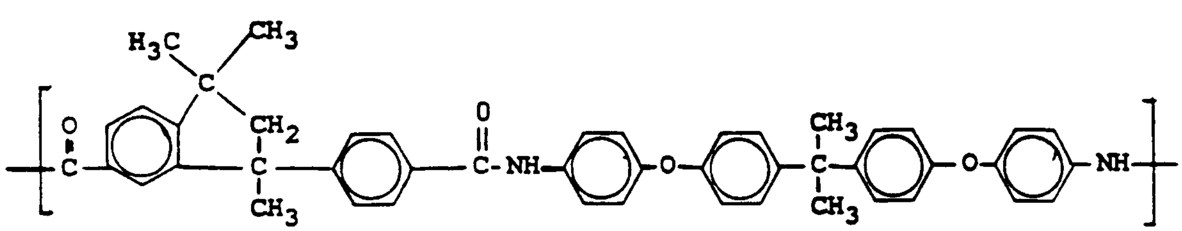

and 90 to 80 mol% of structural units of the formula

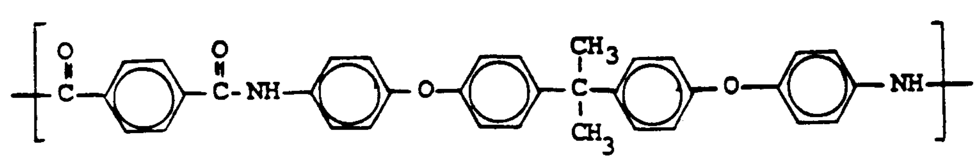

**7.** An electrooptical liquid crystal display element and/or liquid crystal switching element which contains polymers of aromatic polyamides as claimed in one or more of claims 1 to 6 as orientation layer for the liquid crystals.

## Revendications

**1.** Application de polyamides aromatiques substitués comme couche d'orientation dans des éléments d'affichage à cristaux liquides et des éléments de commande à cristaux liquides, caractérisée en ce que les polyamides contiennent des motifs structuraux de formule I

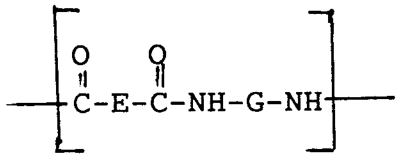 (I)

les unités E et G dans la formule I ayant la signification suivante:

E = 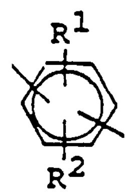

où $R^1$, $R^2$, qui peuvent être identiques ou différents, représentent H, alkyle en $C_1$-$C_6$, alcoxy en $C_1$-$C_6$, sous réserve qu'au moins l'un des restes $R^1$ ou $R^2$ contienne un atome de carbone substitué de façon tertiaire, de préférence le groupe $-C(CH_3)_3$, ou

= 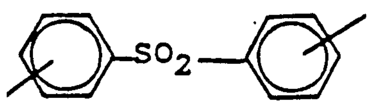 ou 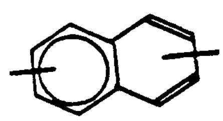 ou

= 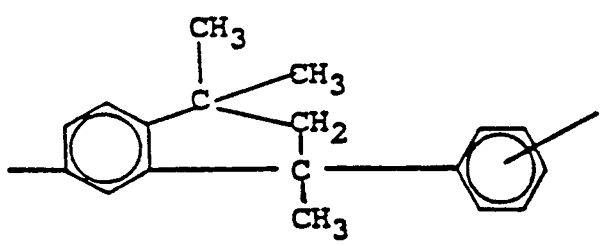 , et

G = 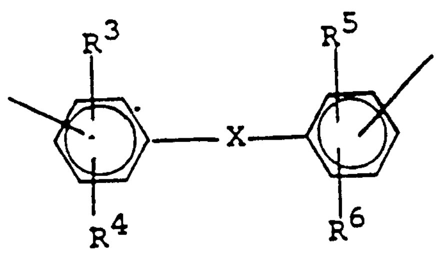

où $R^3$, $R^4$, $R^5$, $R^6$, qui peuvent être identiques ou différents, peuvent représenter $-CH_3$, $-CF_3$, $-OCH_3$,

-F, -Cl, -Br ou -H, et X peut représenter -O-, $-C(CH_3)_2-$, $-C(CF_3)_2-$, $-SO_2-$, -CO-, $-CH_2-$ ou le reste

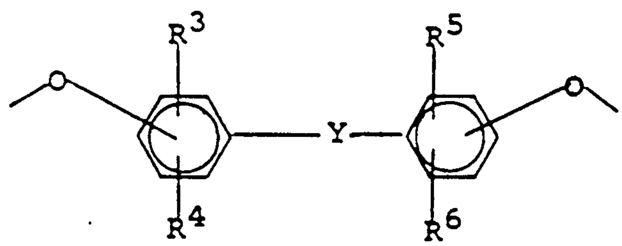

$R^3$ à $R^6$ étant tels que définis ci-dessus et Y pouvant être $-C(CH_3)_2-$, $-C(CF_3)_2-$, $-SO_2-$, -CO-, $-CH_2-$, -O-, ou

= 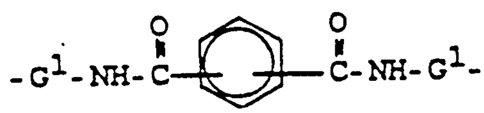

où $G^1$ peut avoir les significations de G indiquées précédemment.

2. Application selon la revendication 1, caractérisée en ce que les polymères représentent des copolymères qui contiennent au moins 10 % en moles, par rapport au copolymère, de motifs structuraux de formule I ainsi que des motifs structuraux de formule II

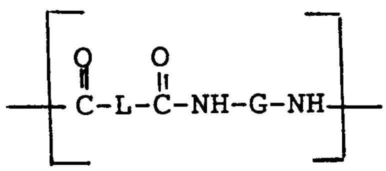 (II)

dans laquelle L représente

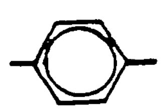 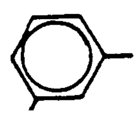 ou 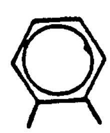

et G a la même signification que dans la formule I.

3. Application selon la revendication 1 et/ou 2, caractérisée en ce que les polyamides contiennent des motifs structuraux de formule

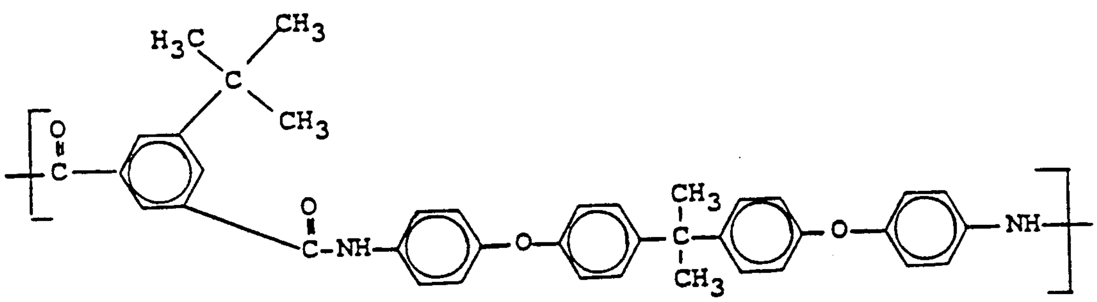

4. Application selon la revendication 1 et/ou 2, caractérisée en ce que les polyamides contiennent des motifs structuraux de formule

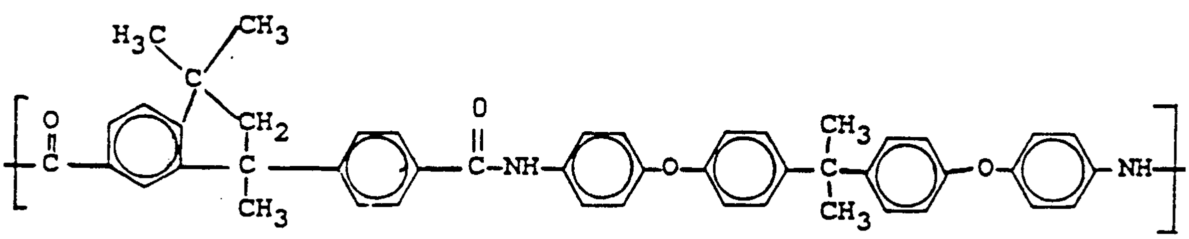

5. Application selon la revendication 1 et/ou 2, caractérisée en ce que les polyamides contiennent de 10 à 20 % en moles de motifs structuraux de formule

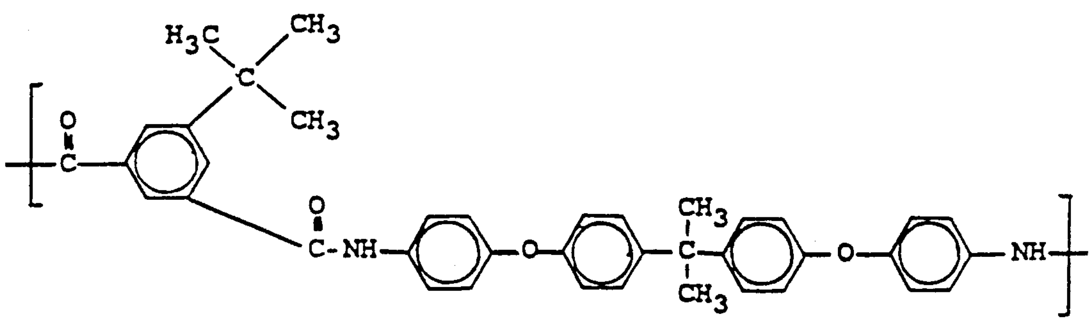

et de 90 à 80 % en moles de motifs structuraux de formule

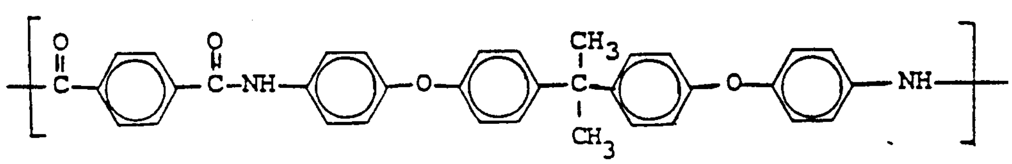

6. Application selon la revendication 1 et/ou 2, caractérisée en ce que les polyamides contiennent de 10 à 20 % en moles de motifs structuraux de formule

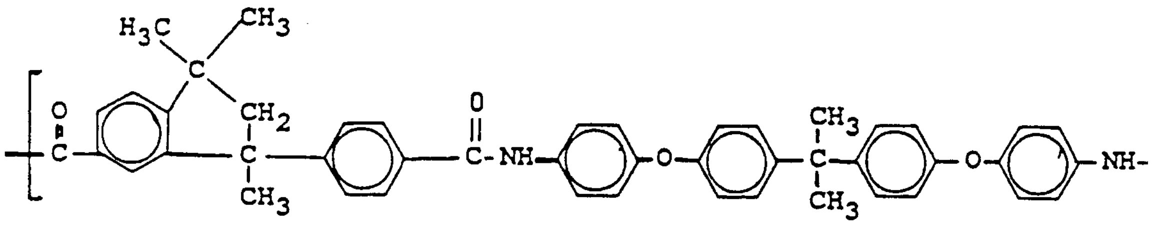

et de 90 à 80 % en moles de motifs structuraux de formule

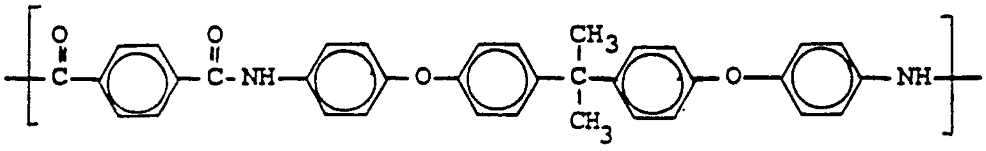

7. Eléments d'affichage à cristaux liquides et/ou éléments de commande à cristaux liquides électro-optiques, caractérisés en ce qu'ils contiennent comme couche d'orientation pour les cristaux liquides des polymères formés de polyamides aromatiques selon l'une ou plusieurs des revendications 1 à 6.